# EUROPEAN PATENT APPLICATION

(11) **EP 1 827 030 A2**
(43) Date of publication of application: **29.08.2007**
(21) Application number: 07100180.4
(22) Date of filing: 05.01.2007
(51) Int. Cl.: H04N 7/50

(54) **Method and apparatus for changing codec to reproduce video and/or audio data streams encoded by different codecs within a channel**

(30) Priority: 10.01.2006 KR 20060002715
(71) Applicant: SAMSUNG ELECTRONICS CO., LTD., Suwon-si, Gyeonggi-do 442-742 (KR)
(72) Inventor: Jung, Choon-sik, Hwaseong-si, Gyeonggi-do (KR); Ham, Cheul-hee, Jeongja-dong, Bundang-gu, Seongnam-si, Gyeonggi-do (KR); Choi, Yun-ho, Gangnam-gu, Seoul (KR)
(74) Representative: Clark, David James

(57) **Abstract**

A method and apparatus for changing codecs to reproduce video and/or audio data streams are provided. The method and apparatus are capable of seamlessly reproducing video and/or audio data streams encoded with two or more different codecs when a change of codecs occurs by determining in advance the start position of a program element at which a change of codecs occurs among video and/or data streams stored in buffers using information regarding a change of codecs included in a data packet and changing the codec used for decoding at the moment when the program element at which the change of codec occurs is first decoded.

## Description

Methods and apparatus consistent with the present invention relate to changing codecs to reproduce video and/or audio data streams, and more particularly but not exclusively, to changing codecs to seamlessly reproduce video and/or audio data streams encoded within a channel using different codecs.

Digital broadcasting via various media such as terrestrial waves, satellite waves, cables and the like has become more prominent worldwide. Digital broadcasting can be classified into terrestrial broadcasting based on the Advanced Television Systems Committee (ATSC) standard, satellite broadcasting based on Digital Video Broadcasting (DVB), and cable broadcasting based on OpenCable. In a sending part which provides digital broadcasting, information regarding video, audio, and additional services is transferred as a transport stream packet by compressing and multiplexing the information regarding video, audio, and additional services according to MPEG-2 specifications; and in a receiving part, information regarding additional services and the like is extracted by parsing the transmitted transport stream, and the extracted information is decoded.

At present, a single codec is used in each channel of digital broadcasting to decode video and audio for transmission. However, the need to apply different codecs according to the characteristics of broadcasting programs within a channel is increasing. For example, in the case of transmitting a high quality movie in which a relatively large quantity of data is included, a limitation of channel bandwidth can be overcome through the use of H.264/MPEG-4 advanced video coding (AVC), which provides a much higher compression rate than a conventional MPEG-2 codec.

However, since broadcasting programs in a channel are conventionally assumed to be encoded with a single codec, when the broadcasting programs of a channel are encoded with various codecs for transmission, buffer clearing and initialization are performed as with a change in channels, and thus video or audio reproduction may be discontinuous at a moment when a change of codecs occurs.

In addition, when video and/or audio data, encoded with different codecs, stored in a storage media such as a DVD or a CD-ROM is reproduced, discontinuity in an image reproduced may occur at the moment when a change of codecs occurs.

Preferred embodiments of the present invention aim to address disadvantages of the prior art, whether identified herein or otherwise.

According to an aspect of the present invention, there is provided method of changing codecs for reproducing video and/or audio data streams encoded with at least two different codecs within a channel, the method including: extracting video and audio program elements and program information by demultiplexing a transport stream including the video and audio program elements and the program information; storing the demultiplexed video and audio program elements and the program information into predetermined buffers, respectively; determining whether a change of codecs occurs and the start position of a program element at which the change of codecs occurs using the program information; extracting an address of a program element at which the change of codecs occurs in the buffers using the start positions of the program elements at which the change of codecs occurs; and selecting a codec which has been used to encode the video and audio program elements stored in the buffers using the extracted addresses in the buffers.

According to another aspect of the present invention, there is provided an apparatus for changing codecs for reproducing video and/or audio data streams encoded with at least two different codecs within a channel including: a stream demultiplexing unit outputting video and audio program elements and program information by demultiplexing a transport stream including the video and audio program elements and the program information; a buffer unit storing the demultiplexed video and audio program elements and the program information; a control unit determining whether a change of codecs occurs and the start position of a program element at which the change of codecs occurs using the program information stored in the buffer unit and selecting codecs to be used to encode the video and audio program elements; and a decoder unit decoding the video and audio program elements stored in the buffer unit using the codec selected by the control unit.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a block diagram of an apparatus for changing codecs to reproduce video and/or audio data streams encoded by different codecs within a channel according to an exemplary embodiment of the present invention;
FIG. 2 is a diagram illustrating the data structure of a transport stream, for use with exemplary embodiments of the present invention;
FIG 3 is a diagram showing the structure of a program map table (PMT) packet, for use with exemplary embodiments of the present invention;
FIG. 4 is a diagram showing the structure of a packetized elementary stream (PES) packet, for use with exemplary embodiments of the present invention;
FIG. 5 is a diagram illustrating the relationship between an input order of encoded video frames and a display order of video frames which are reproduced by the apparatus of FIG. 1;
FIG. 6 is a diagram illustrating the status of an elementary video stream buffer at a moment when codecs are changed, in an exemplary embodiment of the present invention;
FIG. 7 is a flowchart of a method of changing codecs for reproducing video and audio data streams according to an exemplary embodiment of the present invention;
FIGS. 8 and 9 are detailed flowcharts of a process of determining a start point of a transport stream packet included in the method illustrated in FIG. 7.

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings denote like elements.

In an apparatus and method for changing codecs to reproduce video and/or audio data streams according to exemplary embodiments of the present invention, the position of a program element at which a change of codecs occurs in the video and/or audio data streams stored in buffers is determined in advance using information regarding a codec change included in a predetermined packet, and the codecs are changed immediately when decoding the program element at which the change of the codecs occurs so that the video and/or audio data streams are reproduced substantially seamlessly when the change of codecs occurs.

The data streams may be output by a digital broadcasting program transmitted from a broadcasting station, a network transfer program transferred through a predetermined network, or a program stored in a predetermined storage medium such as a blue-ray disc or a digital versatile disc (DVD). Hereinafter, a case in which digital broadcasting programs are transmitted from a broadcasting station within a virtual channel as video and/or audio data streams encoded with at least two different codecs will be considered in detail for the convenience of description.

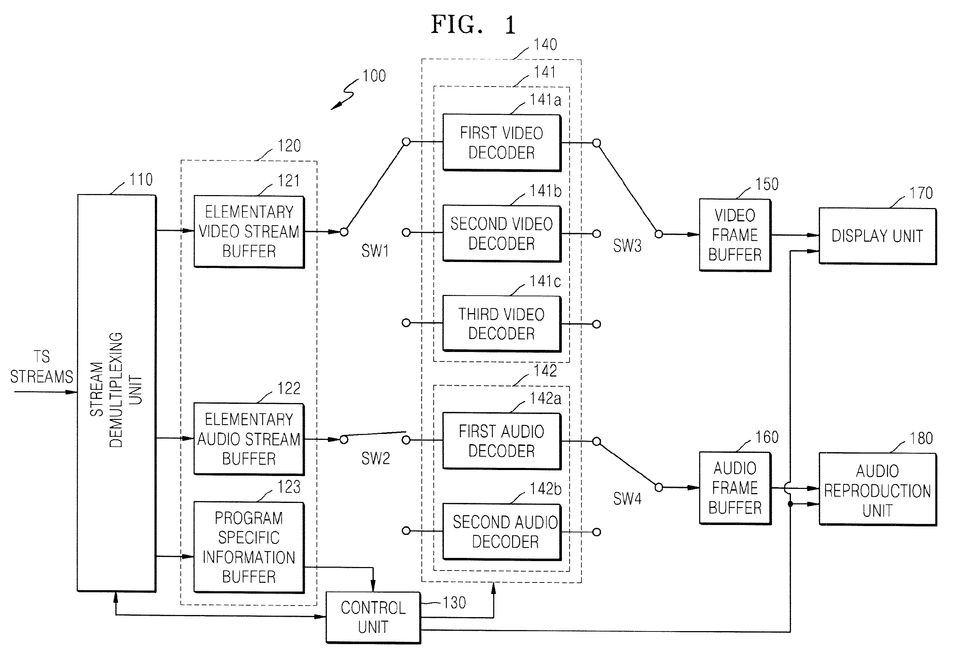

The FIG. 1 is a block diagram of the apparatus 100 for changing codecs to reproduce video and/or audio data streams encoded by different codecs within a channel.

Referring to FIG. 1, the apparatus 100 includes a stream demultiplexing unit 110, a buffer unit 120, a control unit 130, a decoding unit 140, a video frame buffer 150, an audio frame buffer 160, a display unit 170, and an audio reproduction unit 180.

The stream demultiplexing unit 110 receives a transport stream including video and audio program elements and program information, demultiplexes the received transport stream, and outputs the video and audio program elements and the program information. The transport stream demultiplexed by the stream demultiplexing unit 110 will now be described.

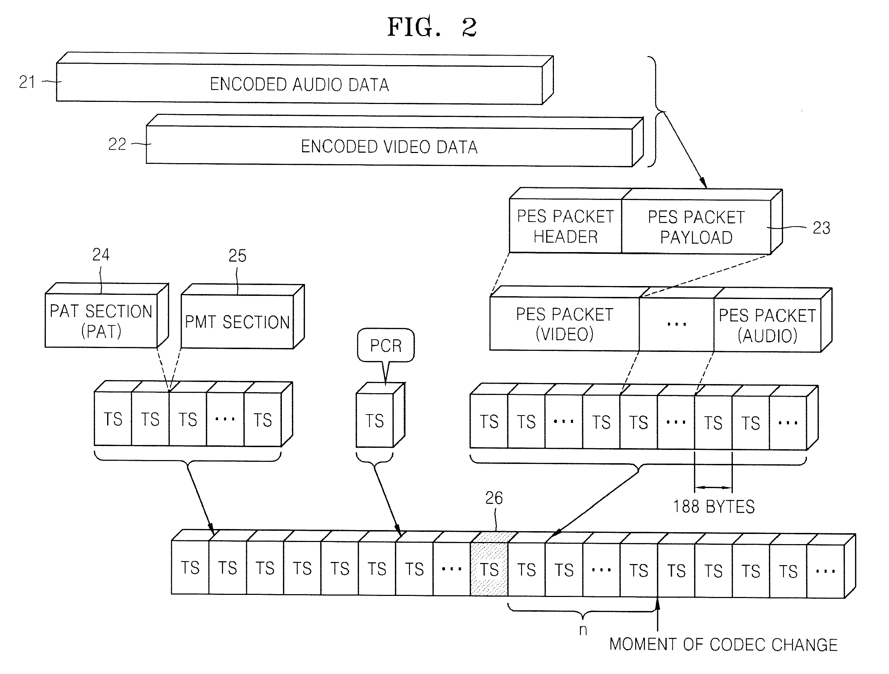

The digital broadcasting program, in which a plurality of programs are time-division multiplexed, is transmitted as a transport stream. Referring to FIG. 2, which illustrates the data structure of the transport stream, the transport stream contains consecutive repetitions of a packet called transport stream (TS) packet having a fixed length of 188 bytes. The program information, which indicates the type of a bit sequence that defines the program, a program clock reference (PCR) for synchronization of the series of the bits and media, and encoded video and audio data 21 and 22 are transmitted together in the transport stream packet. Here, the video and/or audio data streams to be reproduced are assumed to have been encoded with various codecs. For example, a codec such as MPEG-1, MPEG-2, MPEG 4, VC-1, or H-264 may be used to encode video data, and a codec such as AC-3, LPCM, or DTS may be used to encode audio data. The encoded video data 21 and encoded audio data 22 are multiplexed into a packetized elementary stream (PES) packet 23, and the program information is multiplexed into sections 24 and 25, and the PES packet 23 and sections 24 and 25 are multiplexed into a transport stream packet.

Referring back to FIG. 1, the demultiplexed video, audio program elements, and the program information in the stream demultiplexing unit 110 are stored in an elementary video stream buffer 121, an elementary audio stream buffer 122, and a program specific information (PSI) buffer 123, respectively.

The control unit 130 determines a start position of the program element at which the change of the codec occurs in the received transport streams by analyzing the program information stored in the PSI buffer 123 and controls the decoding unit 140 to select a codec for decoding the video and audio program elements.

When a program element at which the change of the codec occurs is included in the received transport stream, it should be known that the change of the codec occurs before the program element at which the change of the codec occurs is decoded to reproduce the video and audio streams seamlessly.

To check whether the change of the codec occurs, the control unit 130 determines the position in the received transport streams of a transport stream packet including the program element at which the change of the codec occurs using the PSI and/or program and system information protocol (PSIP) data of the transport stream packet including the program information. As is well known, the PSI is information defined in MPEG, which is ISO/IEC 13818-1, and includes information regarding program specifications. The PSI, which is special information transmitted in a packet with a program identifier (PID) = 0, includes four tables including a program association table (PAT) including a PID value of a program map table (PMT) describing elements of the program for each program, a PMT including an identification number of the program and a PID list of the transport stream packet through which a bit sequence such as video and audio constituting the program and attached information are delivered, a conditional access table (CAT) which is required to permit only authorized users to decode and reproduce a bit sequence that are scrambled by setting a restriction on the reproduction of the bit sequence, and a network information table (NIT) including information regarding physical networks of a receiving region.

The control unit 130 determines the position of a transport stream packet including the program element at which the change of the codec occurs using information regarding the change of the codec included in the PMT or information regarding the change of the codec included in a virtual channel table (VCT) which includes information regarding a virtual channel among tables according to the PSIP. In addition, the control unit 130 determines a codec used to encode the received program element using a combination of a stream identifier stream_id of the PES packet and a substream identifier sub_stream_id, and can determine a start position of the program element at which the change of the codec occurs from the information regarding the determined codec.

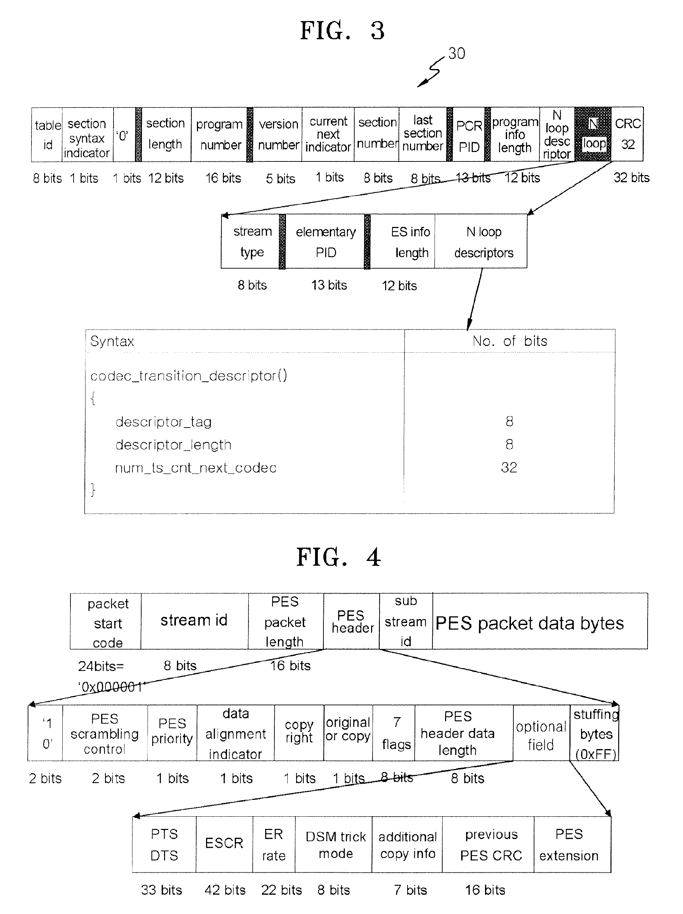

FIG 3 is a diagram showing the structure of a PMT packet 30, for use with exemplary embodiments of the present invention. Referring to FIG. 3, the information regarding a codec used for encoding the program element is stored in a stream type field of the PMT packet 30. In addition, a codec_transition_descriptor indicating a difference between spatial positions of the PMT packet and the transport stream packet at which the change of the codec occurs is inserted into an N loop descriptor field of the PMT packet 30.

The control unit 130 can determine whether there is a change of a codec used to encode a received packet from the stream type and a version number field which is increased by one every time the section information of the PMT packet 30 are changed. For reference, stream types defined in ISO/IEC 13818-1 are shown in Table 1 below.

**[TABLE 1]**

| **Value** | **Description** |
|---|---|
| 0x00 | ITU-T ISO IEC Reserved |
| 0x01 | ISO IEC 11172-2 Video |
| 0x02 | ITU-T Rec H.262 ISO/TEC 13818-2 Video or ISO/IEC 11172-2 construised parameter video stream |
| 0x03 | ISO/IEC 11172-3 Audio |
| 0x04 | ISO/IEC 13818-3 Audio |
| 0x05 | ITU-T Rec. H.222.0 ISO/IEC 13818-I private_sections |
| 0x06 | ITU-T Rec. H.222.0 ISO/IEC 13818-1 PES packets containing private data |
| 0x07 | ISO/IEC 13522 MHEG |
| 0x08 | ITU-T Rec. H.222.0 ISO/IEC 13818-1 Annex A DSM-CC |
| 0×19 | ITU-T Rec H 222 1 |
| 0x0A | ISO IEC 13818-6 type A |
| 0×0B | ISO TEC 18818 -6 type B |
| 0×0C | ISOTEC 13818-6 type C |
| 0x0D | ISOTEC 13818-0 type D |
| 0x0E | ITY-T Rec H.222.0 ISO IEC 13818-1 auxiliary |
| 0x0F | ISO IEC 1381 18-7 Audio with ADTS transpost syntax |
| 0x10 | ISO IEC 14496-3 Visual |
| 0x11 | ISO IEC 14496-3 Audio with the LATM transport syntax as defined in ISO IEC 14496-3 AMD-1 |
| 0X12 | ISO IEC 14496-1 SL-packetized stream or FlexMm stream carried in PES packets |
| 0×13 | ISOTEC 14496-1 SL-packetized stream in FlexMax stream carried in ISOTEC 14496_sections |
| 0×14 | ISOTEC 13818-6 Synchronized Dreamload Protocol |
| 0×15 | Metadata carried in PES packers |
| 0×16 | Metsdass carried in metadata sections |
| 0x17 | Metadata carried in ISO/IEC 13818-6 Data Carousel |
| 0x18 | Metadata carried in ISO/IEC 13818-6 Object Carousel |
| 0x19 | Metadata carried in ISO/IEC 13818-6 Synchronized Download Protocol |
| 0x1A | IPMP stream (defined in ISO/IEC 13818-11, MPEG-2 IPMP) |
| 0x1B | AVC video stream as defined in ITU-T Rec. H.264 ISO/IEC 34496-10 Video |
| 0x1C-9x7E | ITU-T Rec. H.222.0 ISO/IEC 13818-1 Reserved |
| 0x7F | IPMP stream |
| 0x80-0xFF | User Private |

The control unit 130 determines whether a codec of the received transport stream changes from the stream type field and the version number field, and analyzes the codec_transition_descriptor to obtain relative position information regarding the transport stream packet at which the change of the codec occurs, when the change of the codec occurs.

The codec_transition_descriptor includes num_ts_cnt_next_ codec information indicating a relative position of the transport stream packet encoded with a different codec than the PMT packet including the program information. For example, referring to FIG. 2, when a received transport stream packet that includes video or audio data encoded with a different codec after a PMT packet 26 including the program information is located n packets after the PMT packet 26, then num_ts_cnt_next_codec has a value of n. Accordingly, the control unit 130 can determine at which transport stream packet after the current PMT packet the change of the codec occurs from the value of num_ts_cnt_next_codec of the codec_transition_descriptor. A descriptor_tag of the codec_transition_descriptor is used to identify various descriptors of the program element, and descriptor_length indicates the length of a descriptor.

FIG. 4 is a diagram showing the structure of a PES packet, for use with exemplary embodiments of the present invention.

Instead of using the codec_transition_descriptor for separately describing position information of a packet at which a codec changes, the control unit 130 can determine a codec used to encode a video or audio program element included in the received transport stream packet using a combination of a stream identifier stream_id included in a header of a PES and a sub stream identifier sub_stream_id included in PES packet data. In addition, the control unit 130 can determine the start position of a program element at which the change of codec occurs from information regarding the determined codec.

Table 2 shows an example of codec types according to a combination of the stream identifier stream_id included in a PES header and the sub stream identifier sub_stream_id included in the PES packet data.

**[TABLE 2]**

| STREAM IDENTIFIER (stream_id) | SUB-STREAM IDENTIFIER (sub_stream_id) | CODEC TYPE |
|---|---|---|
| 1110 0000b | | MPEG-2 VIDEO STREAM |
| 1110 0010b | | MPEG-4 AVC VIDEO STREAM |
| 1111 1101b | | VC-1 VIDEO STREAM |
| 110x xxxb | | MPEG AUDIO STREAM |
| 1011 1101b | 1000 0xxxb | AC-3 AUDIO STREAM |
| 1011 1101b | 1000 1xxxb | DTS AUDIO STREAM |
| .... | .... | .... |

The control unit 130 can determine a codec used to encode a packet in a current process using a combination of the stream identifier stream_id and the sub-stream identifier sub_stream_id and determine the start position of a transport stream packet including a program element using a different codec by monitoring a change of the codec used to encode an input packet.

After the control unit 130 analyzes the program information included in a transport stream as described above, transfers PIDs for program elements and the start position information of the program element at which the change of the codec occurs to the demultiplexing unit 110, and request a specific address of a buffer storing the program element at which the change of the codec occurs.

When the stream demultiplexing unit 110 receives a request for the address information from the control unit 130, the stream demultiplexing unit 110 compares a stream identifier field of a PES packet of a transport stream including a program element corresponding to the stream identifier of the codec to determine a position at which the codec changes, and transfers addresses in the video and elementary audio buffers 121 and 122 in which a program element at which the codec changes is stored.

The control unit 130 selects and controls decoders of the video and audio decoding units 141 and 142 included in the decoding unit 140 using the address at which the change of codec occurs, which is obtained from the video and elementary audio stream buffers 121 and 122 via the stream demultiplexing unit 110, so that a previous codec is used to decode program elements having addresses prior to the address at which the change of codec occurs, and a new codec is used to decode program elements which have the same address as or addresses after the address at which the change of codec occurs. The video decoding unit 141 includes a plurality of video decoders 141a to 141c for decoding video data which has been encoded with different codecs and output from the elementary video stream buffer 121. The audio decoding unit 142 includes a plurality of audio decoders 142a and 142b for decoding audio data which has been decoded with different codecs and output from the elementary audio stream buffer 122. The numbers of the video decoders 141a to 141c and the audio decoders 142a and 142b are not limited to those illustrated in FIG. 1, and may vary according to the number of codecs used for encoding.

The video and audio data decoded in the video and audio decoding units 141 and 142 are stored in video and audio frame buffers 150 and 160 respectively, and output to the display unit 170 and the audio reproduction unit 180, respectively. The display unit 170 may display information regarding a currently used codec through on screen graphics (OSG).

According to an exemplary embodiment of the present invention, to seamlessly reproduce video and/or audio data streams encoded with different codecs, the sizes of video and audio stream buffers 121 and 122 of the buffer unit 120 are ideally set to a maximum size among the various buffer sizes which different codecs require. This is to prevent an overflow in the buffers 121 and 122, which may occur when changing codecs due to a difference in bit rates and the like of the codecs.

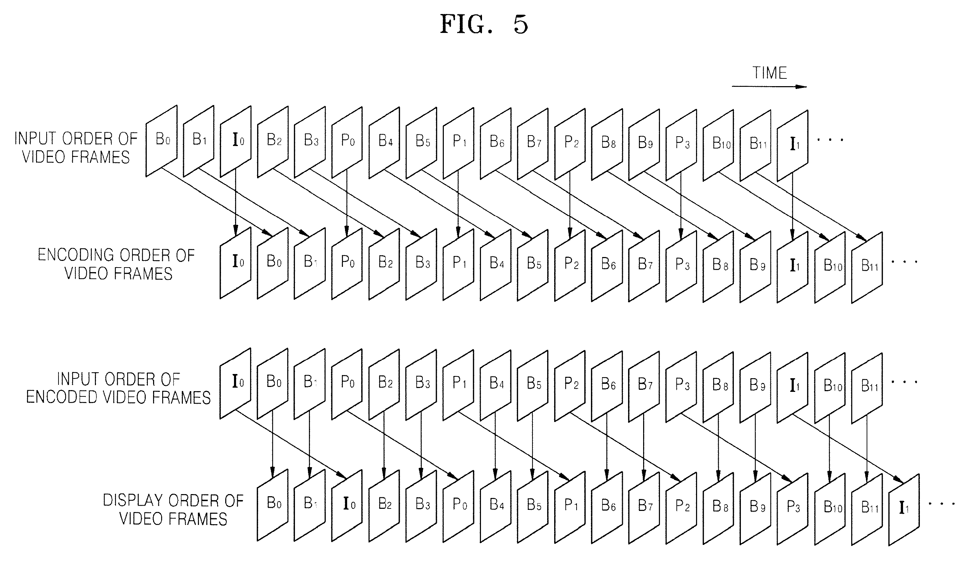

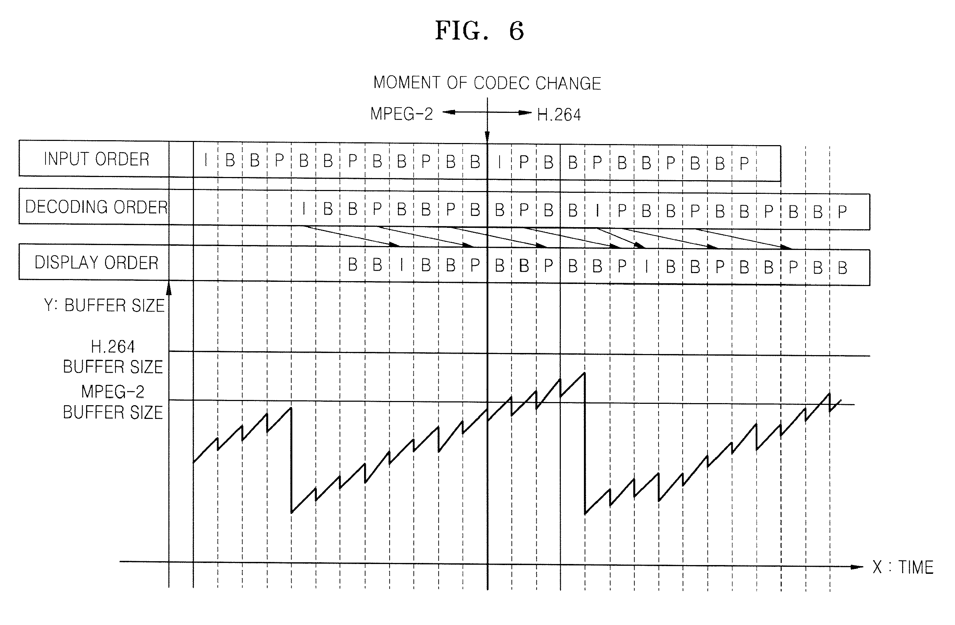

FIG. 5 is a diagram illustrating the relationship between an input order of encoded video frames and a display order of video frames which are reproduced by the apparatus for changing codecs to reproduce video and audio data streams according to an exemplary embodiment of the present invention. FIG. 6 is a diagram illustrating the status of an elementary video stream buffer at a moment when codecs are changed, in an exemplary embodiment of the present invention.

Referring to FIG. 5, a video data stream includes an intra frame (I frame), a forward predicted frame (P frame), and a bi-directional predicted frame (B frame). The I frame can restore an original image only using data included in the frame, since the I frame is predicted without reference to another frame. The P frame is predicted with reference to a previous I or P frame. The B frame cannot be restored without using a previous or subsequent I or P frame, since the frame B is predicted with reference to previous and subsequent I and/or P frames. Reference frames need to be stored in the video stream buffer when the video data stream is reproduced according to the type of video frame being reproduced. The status of the elementary video stream buffer 121 during a decoding process is shown in FIG. 6.

Referring to FIG. 6, an overflow may occur when changing codecs from an MPEG-2 codec to an H.264 codec if the elementary video stream buffer 121 is set to have an upper storage limit equal to the limit required for an MPEG-2 codec. Accordingly, the elementary video stream buffer 121 has a storage capacity equal to the maximum required by any of the codecs that can be used.

Similarly, the audio stream buffer 122 has a storage capacity equal to the maximum required by any of the codecs that can be used to prevent an overflow when changing codecs when an audio data stream is reproduced.

For a digital broadcasting program, when the required sizes of input buffers for different codecs of program elements within a virtual channel are unknown, the sizes of the elementary video and audio stream buffers 121 and 122 can be adjustable to a buffer size recorded in a certain region of the received program element.

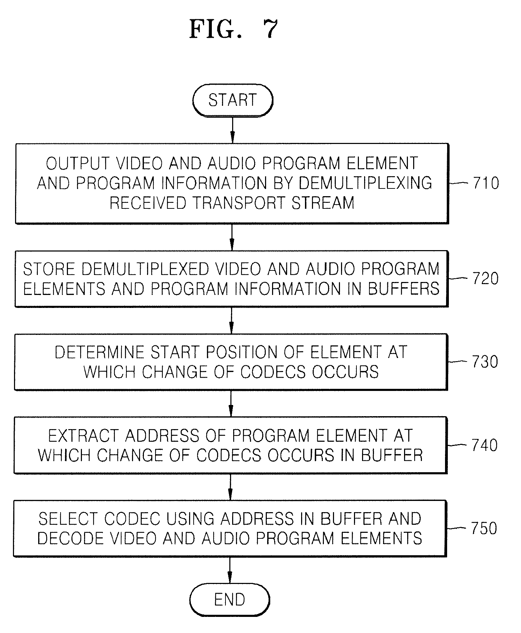

FIG. 7 is a flowchart of a method of changing codecs for reproducing video and audio data streams according to an exemplary embodiment of the present invention.

Referring to FIG. 7, in operation 710, the stream demultiplexing unit 110 receives a transport stream including video and audio program elements and program information and demultiplexes the received transport stream to output video and audio program elements and the program information. As described above, the video and audio data streams may be output by a digital broadcasting program, a network transfer program, or a program stored in a certain storage medium. In operation 720, the stream demultiplexing unit 110 stores the demultiplexed video and audio program elements and the program information in the buffer unit 120.

In operation 730, the control unit 130 determines the start position of a transport stream packet including a program element at which a change of codecs occurs using the program information stored in the buffer unit 120. As described above, to determine the start position of the transport stream packet including the program element at which the change of codecs occurs, the PMT, the VCT, or a combination of a stream identifier included in a header of the PES and a sub-stream identifier included in a data region of the PES may be used.

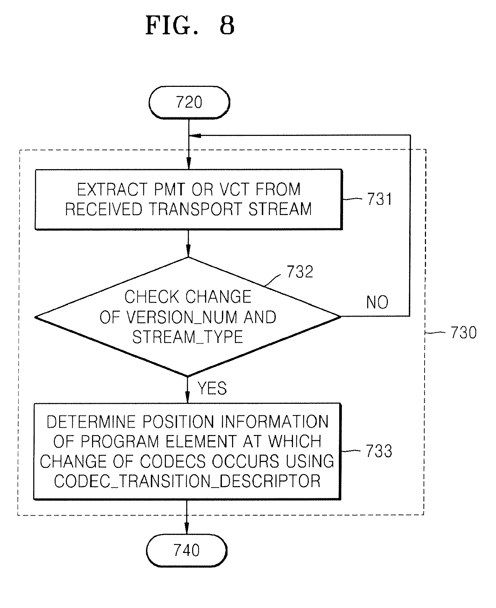

Referring to FIG. 8, which illustrates operation 730 when the PMT or VCT is used, in operation 731, the control unit 130 extracts the PMT or VCT which includes the program information from the received transport streams to determine the start position of the transport stream packet including a program element at which the change of codecs occurs.

Next, in operation 732, the control unit determines whether the change of codecs occurs using a stream type field of the PMT or VCT and information in a version_number field.

In operation 733, when a change of codecs is found in operation 732, the control unit 130 determines the position of the transport stream packet at which the change of codecs occurs with respect to the current packet using codec_transition_descriptor included in a certain region of the PMT or VCT. In addition, the control unit 130 requests the stream demultiplexing unit 110 for the address of the buffer unit 120 in which the program element using the different codec is stored.

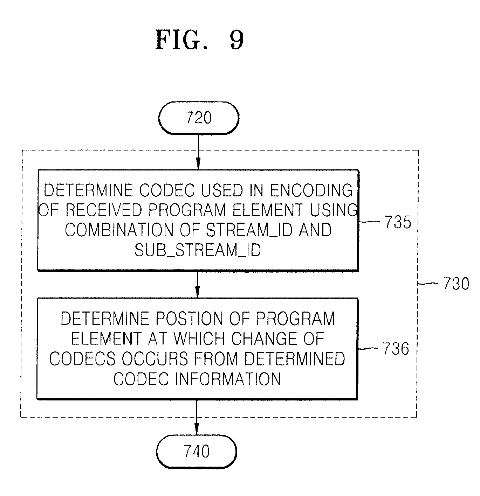

In another exemplary embodiment, referring to FIG. 9, which illustrates operation 730, in operation 735, the control unit 130 determines a codec used in a received program element from a combination of the stream identifier stream_id included in the header of the PES and the sub-stream identifier sub_stream_id included in the data region of the PES.

In operation 736, the control unit 130 determines the start position of a program element at which a change of codecs occurs within received transport streams and requests the address of the buffer unit 120 storing the program element from the stream demultiplexing unit 110.

Referring back to FIG. 7, in operation 740, the stream demultiplexing unit 110 provides the address of the buffer unit 120 in which the program element is stored to the control unit 130 in response to a request for the address from the control unit 130.

In operation 750, the control unit 130 selects and controls decoders of the video and audio decoding units 141 and 142 using the address information so that program elements before the change of the codec occurs are decoded using a previous codec, and program elements after the change of the codec occurs are decoded using a different codec.

The embodiments of the present invention described herein may be used to seamlessly reproduce video and/or audio data streams, encoded with different codecs, which are included in a network transfer program or a program stored in a certain storage medium, together with a digital broadcasting program.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

According to the exemplary embodiments of the present invention, video and/or audio data streams can be reproduced seamlessly without initialization or overflow of a buffer when a codec changes while reproducing video and/or audio data streams.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of changing codecs for reproducing video and audio data streams encoded with at least two different codecs within a channel, the method comprising:
extracting video and audio program elements and program information by demultiplexing a transport stream comprising the video and audio program elements and the program information (710);
storing the extracted video and audio program elements and the extracted program information in buffers (720);
determining whether a change of codecs occurs and a start position of a program element at which the change of codecs occurs using the program information (730);
extracting an address of a program element at which the change of codecs occurs in the buffers using the start position of the program element at which the change of codecs occurs (740); and
selecting a codec which has been used to encode the video and audio program elements stored in the buffers using the extracted address in the buffers (750).

2. The method of claim 1, wherein the program information comprises position information of a transport stream packet comprising the program elements at which the change of codecs occurs obtained by using at least one of program specific information and program and system information protocol data.

3. The method of claim 1 or 2, wherein the determining of whether the change of codecs occurs and the start position of the program element at which the change of codecs occurs comprises:
extracting a program map table (PMT) from the received transport stream (731);
determining whether the change of codecs occurs using a stream type field and a version number field of the program map table (732); and
determining the position of the transport stream packet comprising the program element at which the change of codecs occurs using a codec transition descriptor included in a region of the PMT (733).

4. The method of claim 1 or 2, wherein the determining whether a change of codecs occurs and the start position of the program element at which the change of codecs occurs comprises:
extracting a virtual channel table (VCT) from the received transport stream (731); and
determining the position of the transport stream packet comprising the program element at which the change of the codec occurs using a codec transition descriptor included in a certain region of the virtual channel table (732,733).

5. The method of claim 3, wherein the codec transition descriptor comprises information indicating a relative position of the transport stream packet comprising the program element encoded with a different codec with respect to the currently received transport stream packet.

6. The method of claim 4, wherein the codec transition descriptor comprises information indicating a relative position of the transport stream packet comprising the program element encoded with a different codec with respect to the currently received transport stream packet.

7. The method of claim 1 or 2, wherein the determining whether a change of codecs occurs and the start position of the program element at which the change of codecs occurs comprises:
determining a codec used to encode the received program element using a combination of a stream identifier included in a header of a packetized elementary stream (PES) and a sub-stream identifier comprised in a data region of the PES (735); and
determining the start position of the program element at which the change of codecs occurs from information regarding the determined codec (736).

8. The method of any preceding claim, wherein the selecting of codecs to be used to encode the video and audio program elements further comprises selecting a previous codec to decode the video and audio program elements having positions prior to the extracted positions in the buffers, and selecting a different codec to decode the video and audio program elements having positions after the extracted positions in the buffers.

9. The method of any preceding claim, wherein the buffers have a maximum storage capacity required for the codecs that can be used.

10. The method of any preceding claim, wherein sizes of the buffers are converted to buffer sizes recorded in a region of the received program element.

11. The method of any preceding claim, wherein the transport stream is output by a digital broadcasting program, a network transfer program, or a program stored in a storage medium.

12. An apparatus for changing codecs for reproducing video and audio data streams encoded with at least two different codecs within a channel, the apparatus comprising:
a stream demultiplexing unit (110) which outputs video and audio program elements and program information by demultiplexing a transport stream including the video and audio program elements and the program information;
a buffer unit (120) which stores the video and audio program elements and the program information output by the stream demultiplexing unit (110);
a control unit (130) which determines whether a change of codecs occurs and a start position of a program element at which the change of codecs occurs using the program information stored in the buffer unit (120) and selects a codec to be used to encode the video and audio program elements; and
a decoder unit (140) which decodes the video and audio program elements stored in the buffer unit using the codec selected by the control unit (130).

13. The apparatus of claim 12, wherein the control unit (130) transfers the start position of the program element at which the change of codecs occurs in the received transport stream to the stream demultiplexing unit, and the stream demultiplexing unit (110) transfers to the control unit (130) an address in the buffer unit (120) of the program element at which the change of codecs occurs using the start position.

14. The apparatus of claim 12 or 13, wherein the program information comprises position information of a transport stream packet comprising the program elements at which the change of codecs occurs using at least one of program specific information and program and system information protocol data.

15. The apparatus of claim 12, 13 or 14 wherein the control unit (130) determines whether there is a change of codecs from stream type and version number fields of a program map table (PMT) extracted from the received transport stream and determines the start position of the transport stream packet including the program element at which the change of codecs occurs using a codec transition descriptor included in a region of the program map table (PMT).

16. The apparatus of claim 12, 13 or 14, wherein the control unit (130) determines the start position of a transport stream packet comprising the program element at which the change of codecs occurs using a codec transition descriptor included in a region of a virtual channel table extracted from the received transport stream.

17. The apparatus of claim 14, wherein the codec transition descriptor comprises information regarding a relative position of the transport stream packet comprising the program element at which the change of the codecs occurs with respect to the currently received transport stream packet.

18. The apparatus of claim 15, wherein the codec transition descriptor comprises information regarding a relative position of the transport stream packet comprising the program element at which the change of the codecs occurs with respect to the currently received transport stream packet.

19. The apparatus of claim 12, 13 or 14, wherein the control unit determines a codec used to encode the received program element using a combination of a stream identifier included in a header of a packetized elementary stream (PES) and a sub-stream identifier included in a data region of the PES and determines the start position of the program element at which the change of codecs occurs from information regarding the determined codec.

20. The apparatus of claim 12, 13, or 14, wherein the decoding unit decodes the video and audio program elements having positions prior to an address of a program element at which the change of codecs occurs in the buffers with a previous codec, and decodes the video and audio program elements having positions after an address of a program element at which the change of codecs occurs in the buffers with a different codec.

21. The apparatus of any one of claims 12-20, wherein the buffer unit has a maximum storage capacity required for the codecs that can be used.

22. The apparatus of any one of claims 12-21, wherein sizes of the buffer unit are converted to buffer sizes recorded in a region of the received program element.

23. The apparatus of any one of claims 12-22, wherein the transport stream is output by a digital broadcasting program, a network transfer program, or a program stored in a storage medium.
